# EUROPEAN PATENT APPLICATION

(11) **EP 2 779 097 A1**
(43) Date of publication of application: **17.09.2014**
(21) Application number: 14159044.8
(22) Date of filing: 12.03.2014
(51) Int. Cl.: G06T 11/00, G01N 23/04

(54) **System and method for generating high resolution models of a target object**

(30) Priority: 14.03.2013 US 201313802978
(71) Applicant: General Electric Company, Schenectady, New York 12345 (US)
(72) Inventor: Suppes, Alexander, 31515 Wunstorf (DE); Neuser, Eberhard, 31515 Wunstorf (DE); Rothe, Nils, 31515 Wunstorf (DE)
(74) Representative: Picker, Madeline Margaret

(57) **Abstract**

Embodiments of the systems and methods of this disclosure utilize different positions, or poses, of a target object 104 to collect images 112 that can result in high-resolution volumetric models of the target object 104. In one embodiment, the object poses define a lateral position and an axial position (also "angular orientation") of the target object 104 relative to components of an imaging system 102, e.g., the source 106 of an x-ray beam. The imaging system 102 captures an image 112 of the target object 104 in the object poses. Further processing of the image data that relates to the images 112 generates a volumetric model of the target object 104 at higher resolution, or with fewer artifacts, as compared to similar volumetric models that arise from conventional scanning of these large parts.

## Description

The subject matter disclosed herein relates to non-destructive testing and, in various embodiments, to systems and methods to improve resolution of models of large parts from images captured using computed-tomography (CT) scanners.

Non-destructive testing utilizes equipment to inspect the interior of a part-under-inspection ("part"). Examples of this equipment include computed-tomography (CT) scanners, ultrasonic scanners, X-ray scanners, and magnetic resonance inspection (MRI) scanners. Often the scanners incorporate components that can change the position of the part during a scan. This feature permits the scanners to capture images of the part in different orientations. When the scan is complete, further processing of the images generates a computer model that permits visual inspection of the part without the need to disrupt the structural integrity of the part-under-inspection.

The resolution of the model relies on the quality of the images, which in turn depends on the position of the part in the scanners. For example, higher resolution models will likely result from images of the part in close proximity, e.g., to an x-ray source that generates an x-ray beam (or, generally, a "beam"). Problems can arise, however, when the part is large and, in particular, too large to fit fully within the beam at the positions necessary to achieve images for high-resolution models. Examples of parts that are difficult to scan include electronic printed circuit boards (PCB) as well as flat and welded sheets of varying construction. These types of parts may extend outside of the beam and, when in position close to the x-ray source to obtain images, cannot rotate through the necessary range (e.g., 360°) to capture sufficient data and images for processing into the high resolution model.

Scan techniques to address these problems can complete the scan but do not achieve the desired resolution. One technique positions the part to ensure that the part resides entirely in the beam and can also rotate through 360°. However, although the position in the beam avoids introducing artifacts into the images due to incomplete data, the part is too far from the x-ray source to achieve desired resolution of the model. An alternative technique positions the part closer to the x-ray source. This technique allows the part to rotate through 360° and offers better resolution, but introduces artifacts into the images because the peripheral edges of the part extend outside of the beam during the scan. In still another technique, the part is in position close to the x-ray source to achieve high resolution images. However, only a small portion, or region of interest, of the part resides in the beam. This technique also introduces artifacts because the majority of the part is found outside of the beam and because the part cannot rotate through 360°.

The discussion above is merely provided for general background information and is not intended to be used as an aid in determining the scope of the claimed subject matter.

This disclosure describes improvements in non-destructive testing of large parts to generate high resolution models. These improvements utilize different positions, or pose, of the part relative to the imaging system to collect images that will result in high-resolution volumetric models of target objects.

This disclosure describes, in one embodiment, an inspection system for performing a scan of a target object. The inspection system comprising a scan device having a source component that generates a beam and a detector component, spaced apart a distance from the source component, that receives the beam. The inspection system also has a control device coupled with the scan device, the control device comprising a processor, a memory coupled to the processor, and one more executable instructions stored in the memory and configured to be executed by the processor. The one or more executable instructions comprise instructions for acquiring a first image of the target object at a first object pose that defines a first lateral position and a first axial position of the target object relative to the scan device. The instructions also comprise acquiring a second image of the target object at a second object pose that defines a second lateral position and a second axial position of the target object relative to the scan device. In one example, a majority of the target object fits within the beam in at least one of the first object pose and the second object pose. In one example, the beam has a beam width that is less than the a dimension of the target object in the first lateral position and the second lateral position.

This disclosure also describes, in one embodiment, a method for generating a volumetric model of a target object. The method includes steps for acquiring a first image of the target object in a first object pose and operating a manipulator to change the first object pose to a second object pose that is different from the first object pose. The method also includes steps for acquiring a second image of the target in the second object pose, reconstructing the volumetric model from the first image and the second image, and generating an output comprising the volumetric model. In one example, a majority of the target object fits within the beam in at least one of the first object pose and the second object pose and the beam has a beam width that is less than a dimension of the target object in the first lateral position and the second lateral position.

This disclosure further describes, in one embodiment, a method for scanning a target object on a scan device, the scan device comprising a source component and a detector component. The method includes steps for locating a target object according to a first set of positioning parameters and capturing a first image at the first set of positioning parameters. The method also includes locating the target object according to a second set of positioning parameters and capturing a second image at the first set of positioning parameters. In one example, a majority of the target object fits within the beam in at least one of the first set of positioning parameters and the second set of positioning parameters and the beam has a beam width is less than a dimension of the target object in the first lateral position and the second lateral position.

This brief description of the invention is intended only to provide a brief overview of subject matter disclosed herein according to one or more illustrative embodiments, and does not serve as a guide to interpreting the claims or to define or limit the scope of the invention, which is defined only by the appended claims. This brief description is provided to introduce an illustrative selection of concepts in a simplified form that are further described below in the detailed description. This brief description is not intended to identify key features or essential features of the claimed subject matter, nor is it intended to be used as an aid in determining the scope of the claimed subject matter. The claimed subject matter is not limited to implementations that solve any or all disadvantages noted in the background.

So that the manner in which the features of the invention can be understood, a detailed description of the invention may be had by reference to certain embodiments, some of which are illustrated in the accompanying drawings. It is to be noted, however, that the drawings illustrate only certain embodiments of this invention and are therefore not to be considered limiting of its scope, for the scope of the invention encompasses other equally effective embodiments. The drawings are not necessarily to scale, emphasis generally being placed upon illustrating the features of certain embodiments of the invention. In the drawings, like numerals are used to indicate like parts throughout the various views. Thus, for further understanding of the invention, reference can be made to the following detailed description, read in connection with the drawings in which:
FIG. 1 depicts a schematic diagram of a perspective view of an exemplary embodiment of an inspection system that can obtain high resolution images of large parts;
FIG. 2 depicts a flow diagram of an exemplary method to generate a model of a target object;
FIG. 3 depicts a schematic diagram of a top view of an exemplary embodiment of an inspection system with a scan trajectory;
FIG. 4 depicts a flow diagram of an exemplary method to orient a target object to conform with one example of a scan trajectory;
FIG. 5 depicts a schematic diagram of a top view of an exemplary embodiment of an inspection system with the target object in a first orientation;
FIG. 6 depicts a schematic diagram of a top view of an exemplary embodiment of an inspection system with the target object in a second orientation;
FIG. 7 depicts a schematic diagram of a top view of an exemplary embodiment of an inspection system with the target object in a third orientation;
FIG. 8 depicts a schematic diagram of a top view of an exemplary embodiment of an inspection system with the target object in a fourth orientation; and
FIG. 9 depicts a schematic diagram of a top view of an exemplary embodiment of an inspection system with the target object in a fifth orientation.

The present disclosure discusses scan techniques for use with inspection and imaging systems, e.g., computed-tomography (CT) systems that use x-ray beams to capture images of target objects. As discussed more below, these techniques have particular use with target objects that have features that extend outside of the x-ray beam. These features can prevent comprehensive imaging of the target object, thus reducing the resolution of volumetric models that result from processing of images from a scan of the target object. Embodiments of the systems and methods of this disclosure, on the other hand, manipulate the target object to position, or pose, the target object to collect images that can result in high-resolution volumetric models of target objects. These object poses define a lateral position and an axial position (also "angular orientation") of the target object relative to the source of the x-ray beam. Movement of the target object to the different lateral and axial positions form a scan trajectory, which defines the relative movement of the beam source from the point-of-view of the target object. This scan trajectory ensures that most, if not all, of the target object fits within the x-ray beam to achieve the most advantageous imaging. To this end, in one implementation, the system can capture an image of the target object at each of the object poses that form the scan trajectory. Further processing of the image data that relates to the images generates a volumetric model of the target object at higher resolution, or with fewer artifacts, as compared to similar volumetric models that arise from conventional scanning of these large parts.

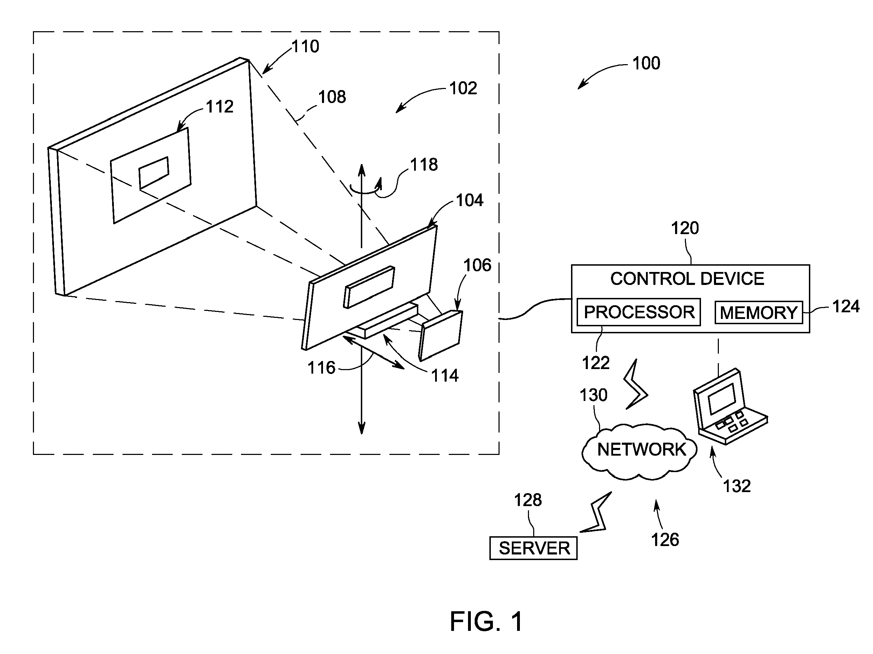

FIG. 1 illustrates an example of an inspection system 100 that can improve resolution of images of objects that require multiple poses to obtain a complete scan. The inspection system 100 includes a scan device 102 to acquire images of a target object 104 (e.g., printed circuit boards, flat and/or thin composite materials, welded metal sheets, etc.), which can have one or more dimensions (e.g., length, width, thickness, etc.). The scan device 102 includes a source component 106 (e.g., an x-ray tube) that generates a beam 108 onto a detector component 110 (e.g., an x-ray detector), which is spaced apart a distance from the source component 106. The beam 108 can have a width that changes between the source component 106 and the detector component 110. The detector component 110 forms an image 112 that corresponds to the object pose of the target object 104 in the beam 108. As shown in FIG. 1, the scan device 102 also includes a manipulator 114 that can change the position of the target object 104, e.g., relative to the source component 106. The manipulator 114 includes a translating component and a rotation component, which are generally identified with arrows and enumerated, respectively, with the numeral 116 and the numeral 118.

The inspection system 100 can couple with a control device 120. Examples of the control device 120 can interface with the scan device 102 to gather image data that relates to the image 112 and to instruct operation of the manipulator 114 to change the orientation of the target object 104. In one example, the control device 120 includes a processor 122 and memory 124, which can store executable instruction, e.g., in the form of software and firmware (collectively, "programs"). The control device 120 can communicate with a network system 126 with one or more external servers (e.g., external server 128) and a network 130 that connects the control device 120 to the external server 128. This disclosure also contemplates configurations in which one or more programs and/or executable instructions are found on the external server 128. The control device 120 can access these remotely stored items to perform one or more functions disclosed herein. In one embodiment, a computing device 132 may communicate with one or more of the control device 120 and the network 130, e.g., to view the image 112 as well as to interface with the inspection system 100, as desired.

As set forth more below, actuation of the translating component 116 and the rotating component 118 can define a plurality of object poses for the target object 104. These object poses define a lateral position and an axial position for the target object 104 relative to the source component 106. The control device 120 captures image data at one or more of these object poses. The control device 120 processes the image data to generate a volumetric model, e.g., a three-dimensional volumetric model that displays on the computing device 132.

In one embodiment, the beam width is less than at least one of the dimensions of the target object in the object poses. In FIG. 1, for example, the beam width is less than the largest dimension (e.g., the width) of the target object 104. Implementing the steps of the methods disclosed herein can position the target object so that a majority of the target object fits within the beam in at least one of the object poses. In one example, the majority of the target object fits within the beam in most, if not all, of the object poses. This feature positions the target object 104 to allow for capture of images that are suited to create high-resolution volumetric models. Moreover, by utilizing one or more different object poses, the imaging system 100 can capture images of all parts of the target object 104. These images provide a complete set of data to define the target object 104, thus reducing the likelihood of anomalies and artifacts being present in the resulting volumetric model.

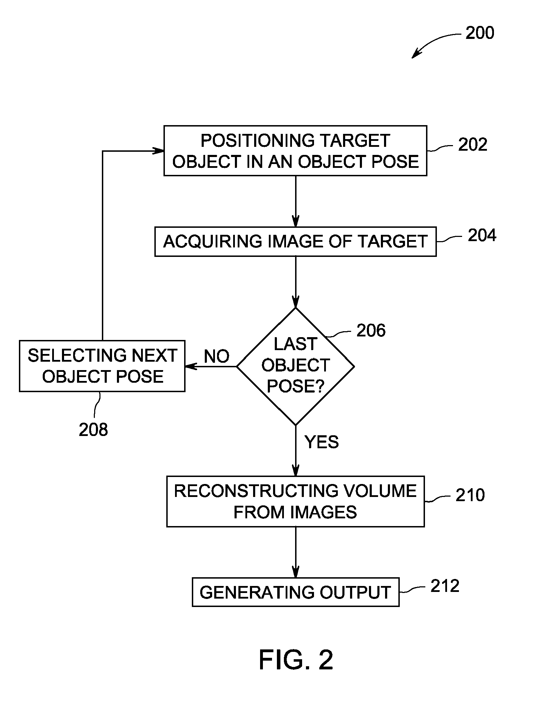

FIG. 2 depicts a flow diagram of an exemplary method 200 to generate a volumetric model of target objects (e.g., target object 104 of FIG. 1). The method 200 includes one or more steps that can be embodied in programs (e.g., software, firmware, etc.) with one or more executable instructions. These programs can be implemented, e.g., on the control device 120 of FIG. 1, to render the volumetric model automatically and/or with limited interaction from an end user.

As shown in FIG. 2, the method 200 includes, at step 202, positioning a target object in an object pose. The method 200 also includes, at step 204, acquiring image data of the target object and, at step 206, determining whether additional object poses are required. If additional poses are necessary, the method 200 includes, at step 208, selecting the next object pose and returns to step 202 to move the target object as required. When all of the poses have been satisfied, on the other hand, the method 200 continues, at step 210, reconstructing a volume from the image data. The method 200 can also include, at step 212, generating an output, which can comprise a model of the target object, and/or a portion thereof, that corresponds to the volume.

Positioning the target object in the object pose(s) (e.g., at step 202) locates a majority and/or all and/or most of the target object within the beam (e.g., beam 108 of FIG. 1). The object poses can comprise a set of positioning parameters (e.g., a lateral position and an axial position), which define the position, orientation, and/or relationship of the target object with the imaging system, e.g., with the source of the beam. In one example, a complete scan of the target object will utilize a plurality of object poses (e.g., a first object pose and a second object pose), wherein a majority of the target object fits within the beam in at least one of the first object pose and the second object pose. The first object pose may have a first set of positioning parameters and the second object pose may have a second set of positioning parameters. Values for the positioning parameters of the second set may be different from the first set. Use of different values and/or sets of positioning parameters changes the orientation and/or the position of the target object, e.g., relative to the beam source. This feature allows the imaging system to capture different images (e.g., a first image and a second image) that correspond the first object pose and the second object pose.

Selection and/or assignment of the object poses prevents contact between the target object 304 and the components (e.g., the source component 306) of the imaging system 300. In one example, an end user can interface with the imaging system 300 to move the target object 304 to each of the object poses. The end user may operate the translation component 316 and the rotation component 318 to locate the target object 304 at one or more values for the positioning parameters. The imaging system 300 can associate, and/or assign, these values with individual object poses. In one implementation, saving and/or storing in memory (e.g., memory 124 of FIG. 1) these different sets of positioning parameters results in a scan trajectory for the object 304.

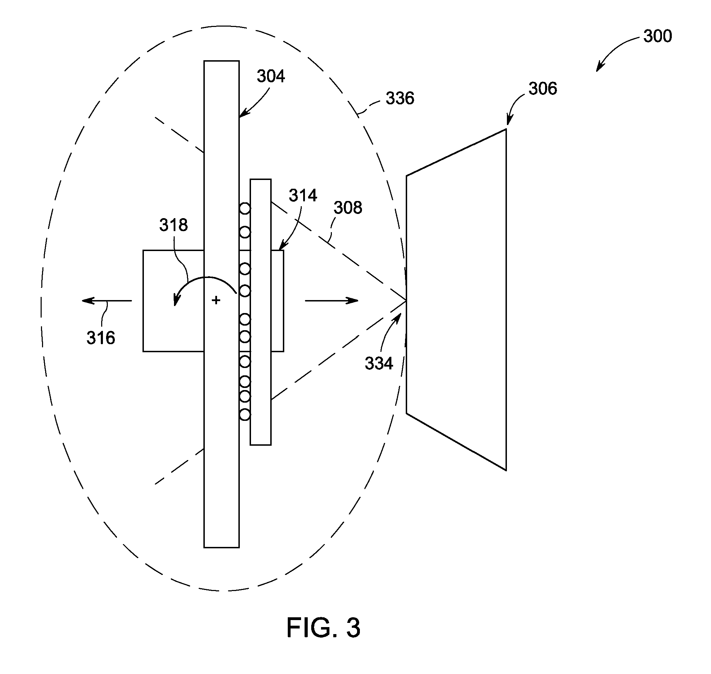

Collectively, the plurality of object poses define a scan trajectory. FIG. 3 illustrates a top, detailed view of an inspection system 300 to illustrate use of the scan trajectory. In FIG. 3, the source component 306 includes a source point 334, which is recognized as the origin of the beam 308 from the source component 306. The source point 334 resides on a scan trajectory 336. Examples of the scan trajectory 336 define the hypothetical path that the source point 334 has from the point-of-view of the target object 304 as the target object 304 moves through the various object poses. Design constraints of the inspection system 300, however, often render the source component 306 stationary, i.e., the source component 306 does not move relative to the target object 304. Thus, to implement the scan trajectory 336, embodiments of the inspection system 300 actuate the translation component 316 and/or the rotation component 318 of the manipulator 314 to move the target object 304 to the object poses relative to the source component 306. This actuation can occur simultaneously and/or individually, as desired. Moreover, this disclosure also contemplates configurations of the imaging system 300 in which the source component (e.g., source component 316) and/or the detector component (e.g., detector component 218) move relative to the object. This type of system may mount the source and detector on robots and/or robotic devices. In one example, the object poses would, in effect, be defined by the relative position of the robot devices in relation to the stationary part. This type of system would find particular use with large parts, e.g., aircraft wings.

The object poses can dictate the shape of the scan trajectory. Examples of the shape include elliptical, oval, and circular, although any shape can apply. In one example, the scan trajectory 336 has an elliptical shape that reflects a plurality of the object poses discussed herein. Processing of images captured along this elliptical shape can result in a volumetric model with improved resolution. When implemented in a manufacturing environment, the imaging system 300 may utilize different scan trajectories that correspond to parts with different characteristics (e.g., dimensions, shapes, etc).

Reconstructing of the volume (e.g., at step 210) generates a volume representing the target object from the image data, or the plurality of images, the inspection system acquires during the scan. In one embodiment, the method 200 can include steps for associating the orientation of the target object with the image data. This feature may include one or more steps for recording the position of the manipulator, e.g., the distance from the source component and/or the angle of rotation of the target object. This information may find use in the algorithms for reconstruction of the volume from the images. Such algorithms are generally known in the art. Some examples of mathematical methods and algorithms include Feldkamp or helical reconstruction, iterative methods like algebraic methods (e.g., ART, SART, etc.), or statistical methods (e.g., maximum likelihood methods).

The inspection system can generate the output (e.g., at step 212) to provide the volumetric module as a visual representation of the target object. This visual representation can be displayed on a screen. The output is compatible with a variety of devices (e.g., computing device 132 (FIG. 1) to allow the end user to view and/or manipulate the model, as desired.

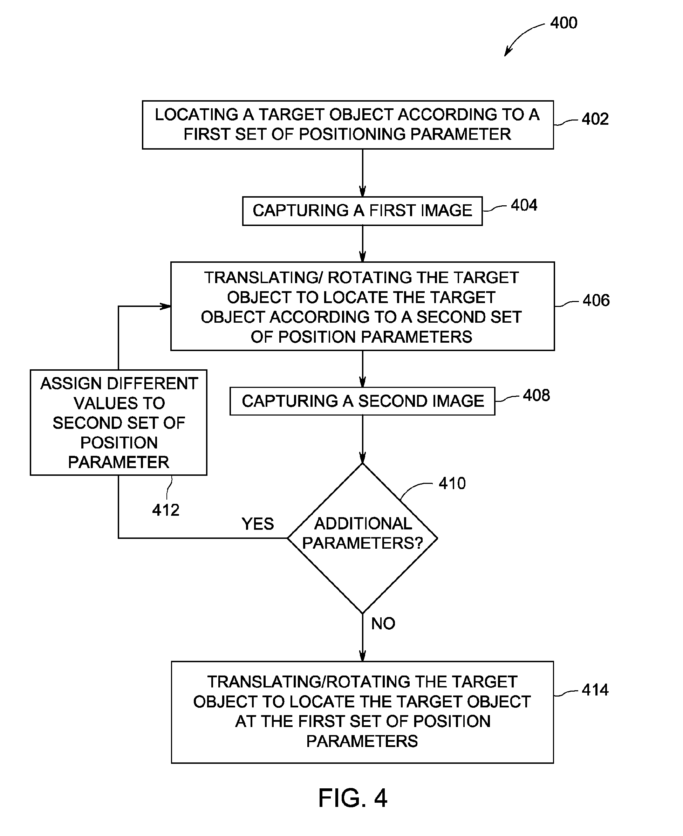

FIG. 4 illustrates a flow diagram of a method 400 to scan a target object by implementing object poses to form one example of a scan trajectory. The method 400 includes, at step 402, locating a target object according to a first set of positioning parameters and, at step 404, capturing a first image at the first set of positioning parameters. The method 400 also includes, at step 406, translating/rotating the target object to locate the target object according to a second set of positioning parameters and, at step 408, capturing a second image at the second set. The method 400 further includes, at step 410, determining whether additional positioning parameters are required to complete the scan trajectory. If other positioning parameters are required, then the method 400 includes, at step 412, assigning different values to the second set of positioning parameters. The method 400 can then continue, at step 406, to translate/rotate the target object to locate the second set of positioning parameters. If no addition position parameters are required, then in one embodiment the method 400 continues, at step 414, translating/rotating the target object to locate the target object at the first set of positioning parameters.

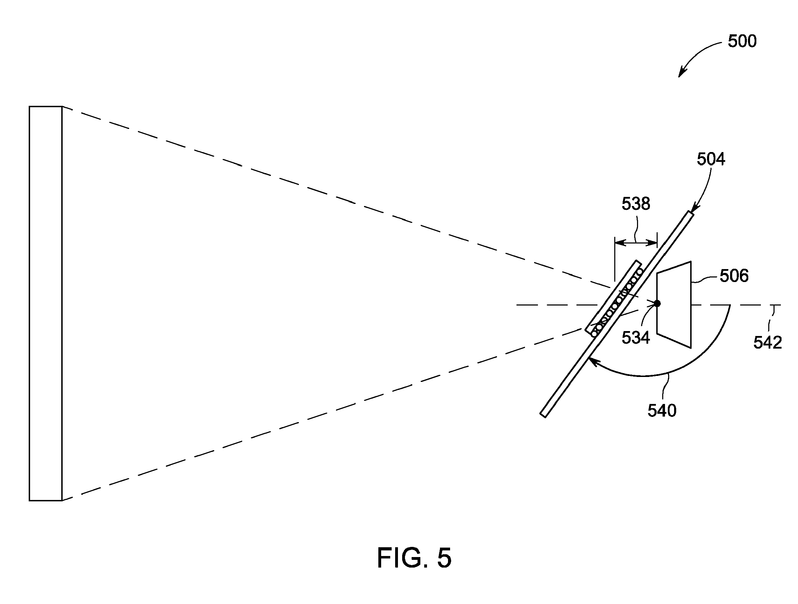

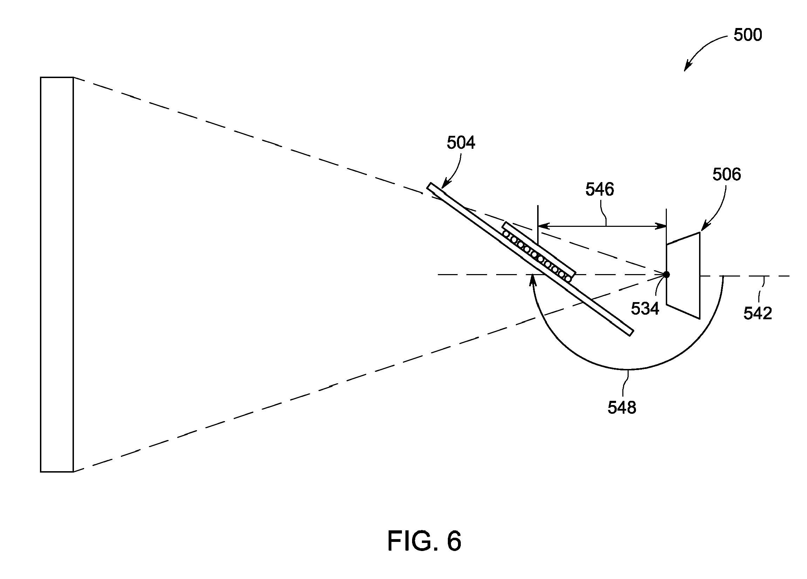

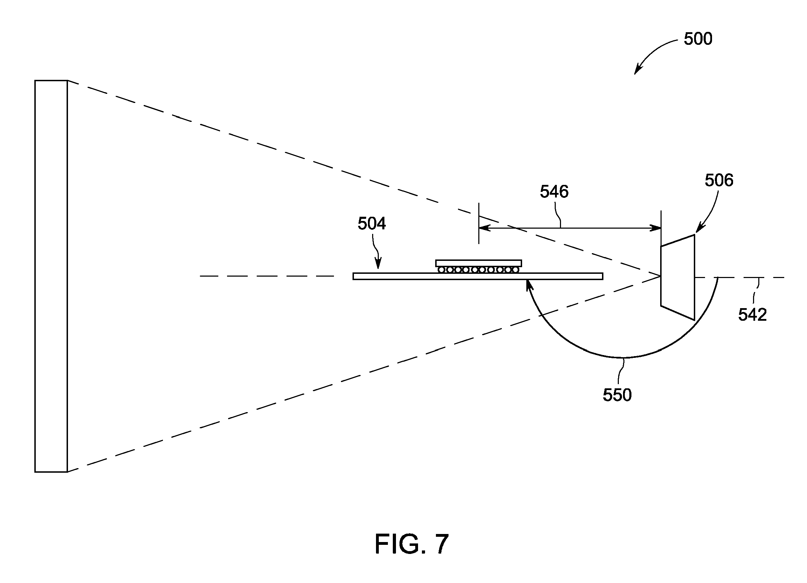

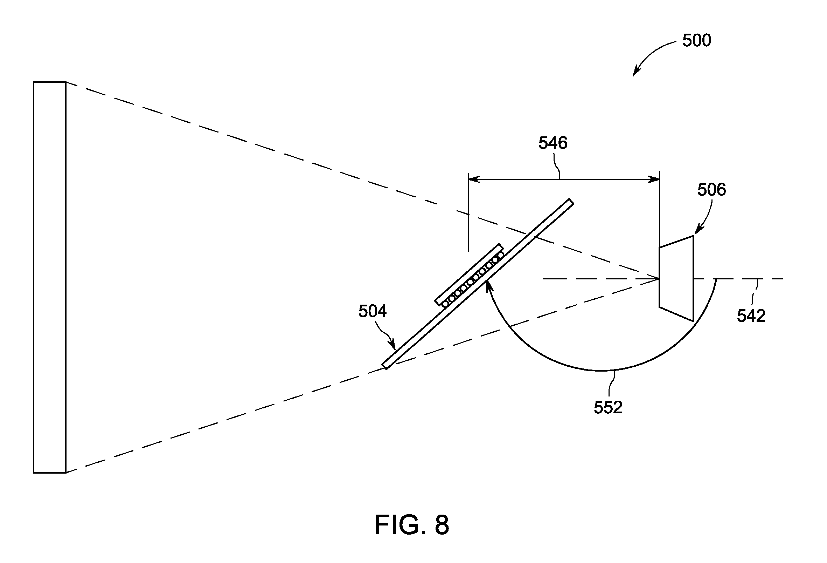

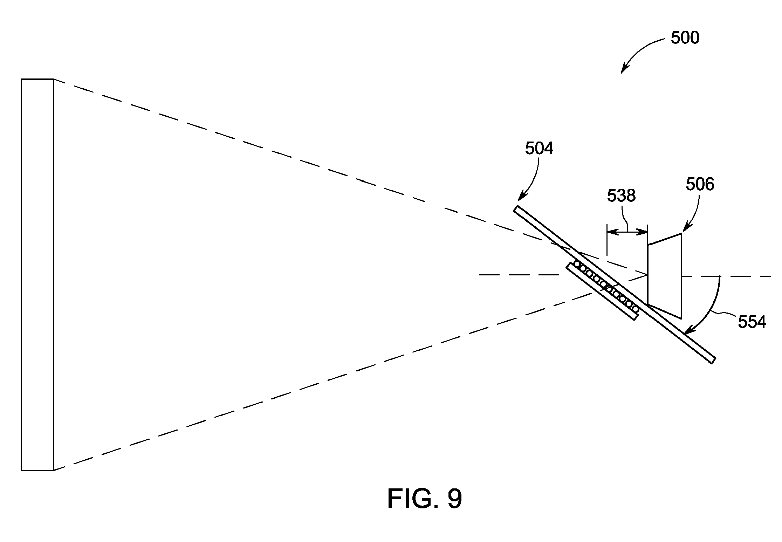

FIGS. 5, 6, 7, 8, and 9 depict a top view of an exemplary inspection system 500 to illustrate one set of orientations that result from execution of the method 400. Translating the target object (e.g., at step 402) changes the position of the target object relative to the source. As shown in FIG. 5, the target object 504 starts in a first lateral position that, in one example, is proximate to the source 506. The target object 504 assumes a first axial position, which is defined by a first lateral position 538 and a first angle 540 from a longitudinal axis 542 that extends through the source point 534. In FIG. 6, the target object 504 is in a second lateral position that is spaced apart a lateral distance from the source 506 by a lateral dimension 546. In one example, the lateral distance is less than half the distance from the source component 506 to the detector component (e.g., detector component 110 FIG. 1). Rotating the target object (e.g., at step 402) can change the axial position of the target object, e.g., relative to the longitudinal axis 542. As shown in FIG. 6, the target object 504 assumes a second axial position defined by a second angle 548. FIGS. 7 and 8 illustrate the target object 504 in, respectively, a third axial position defined by a third angle 550 and a fourth axial position having a fourth angle 552. Translating the target object (e.g., at step 410) can change the position of the target object relative to the source 506. As shown in FIG. 9, the target object 504 can return to the first lateral position 538. Rotating the target object (e.g., at step 412) can cause the target object to assume a fifth axial position having a fifth angle 554.

In light of the foregoing discussion, embodiments of these systems and methods generate a model using one or more images of a target object in different orientations. A technical effect is to improve the resolution of the images, and the resulting model, as well as to eliminate artifacts that can occur when the target object that is larger than the beam generated by the beam source. In one embodiment, the systems and methods implement a scan trajectory, which defines the orientations of the target object and the corresponding images captured thereof. Using these images, the systems and method can implement reconstruction algorithms to render a model that depicts the interior of the part in high resolution.

Collectively, components of the inspection systems described herein can execute high-level logic functions, algorithms, as well as firmware and software instructions. In one example, processor can include a central processing unit (CPU), e.g., an ASIC and/or an FPGA. These processors can also include state machine circuitry or other suitable components capable of receiving inputs. Memory can comprise volatile and non-volatile memory and can be used for storage of software (or firmware) instructions and configuration settings. In some embodiments, the processor and the memory can be contained in a single integrated circuit (IC) or other component. As another example, the processor can include internal program memory such as RAM and/or ROM. Similarly, any one or more of functions of these components can be distributed across additional components (e.g., multiple processors or other components).

As will be appreciated by one skilled in the art, aspects of the present invention may be embodied as a system, method, or computer program product. Accordingly, aspects of the present invention may take the form of an entirely hardware embodiment, an entirely software embodiment (including firmware, resident software, micro-code, etc.), or an embodiment combining software and hardware aspects that may all generally be referred to herein as a "service," "circuit," "circuitry," "module," and/or "system." Furthermore, aspects of the present invention may take the form of a computer program product embodied in one or more computer readable medium(s) having computer readable program code embodied thereon.

Any combination of one or more computer readable medium(s) may be utilized. The computer readable medium may be, for example, but not limited to, an electronic, magnetic, optical, electromagnetic, infrared, or semiconductor system, apparatus, or device, or any suitable combination of the foregoing. More specific examples of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

Program code embodied on a computer readable medium may be transmitted using any appropriate medium, including but not limited to wireless, wireline, optical fiber cable, RF, etc., or any suitable combination of the foregoing.

Computer program code for carrying out operations for aspects of the present invention may be written in any combination of one or more programming languages, including an object oriented programming language such as Java, Smalltalk, C++ or the like and conventional procedural programming languages, such as the "C" programming language or similar programming languages. The program code may execute entirely on the user's computer (device), partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described herein with reference to flowchart illustrations and/or block diagrams of methods, apparatus (systems) and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

As used herein, an element or function recited in the singular and proceeded with the word "a" or "an" should be understood as not excluding plural said elements or functions, unless such exclusion is explicitly recited. Furthermore, references to "one embodiment" of the claimed invention should not be interpreted as excluding the existence of additional embodiments that also incorporate the recited features.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. An inspection system for performing a scan of a target object, said inspection system comprising:
   a scan device having a source component that generates a beam and a detector component, spaced apart a distance from the source component, that receives the beam; and
   a control device coupled with the scan device, the control device comprising a processor, a memory coupled to the processor, and one more executable instructions stored in the memory and configured to be executed by the processor, the one or more executable instructions comprising instructions for:
      acquiring a first image of the target object at a first object pose that defines a first lateral position and a first axial position of the target object relative to the scan device; and
      acquiring a second image of the target object at a second object pose that defines a second lateral position and a second axial position of the target object relative to the scan device,
      wherein a majority of the target object fits within the beam in at least one of the first object pose and the second object pose, and
      wherein the beam has a beam width that is less than a dimension of the target object in the first lateral position and the second lateral position.
2. The inspection system of clause 1, wherein the majority of the target object fits within the beam in both the first object pose and the second object pose.
3. The inspection system of any preceding clause, wherein the first object pose and the second object pose comprise part of a plurality of object poses that define a scan trajectory, and wherein the scan trajectory describes a path of the source component from a point-of-view of the target object.
4. The inspection system of any preceding clause, wherein the path has an elliptical shape.
5. The inspection system of any preceding clause, further comprising a manipulator for moving the target object relative to the source component, wherein the executable instruction include instructions for operating the manipulator to position the target object in the first object pose and the second object pose.
6. The inspection system of any preceding clause, wherein the executable instructions comprise instructions for reconstructing a volumetric model from the first image and the second image.
7. The inspection system of any preceding clause, wherein the executable instructions comprise instructions for implementing a Feldkamp reconstruction algorithm that uses the first image and the second image for reconstructing the volumetric model.
8. The inspection system of any preceding clause, wherein the executable instructions comprise instructions for generating an output comprising the volumetric model representing the target object.
9. The inspection system of any preceding clause, wherein the first lateral position and the second lateral position define a lateral distance measured from the source component, and wherein the lateral distance of the first lateral position is different from the lateral distance of the second lateral position.
10. The inspection system of any preceding clause, wherein the lateral distance in the second lateral position permits the target object to rotate in front of the source component.
11. A method for generating a volumetric model of a target object with an imaging system having a source component that generates a beam and a detector component that is spaced apart a distance from the source component, said method comprising steps for:
   acquiring a first image of the target object in a first object pose;
   operating a manipulator to change the first object pose to a second object pose that is different from the first object pose;
   acquiring a second image of the target in the second object pose;
   reconstructing the volumetric model from the first image and the second image; and
   generating an output comprising the volumetric model,
   wherein a majority of the target object fits within the beam in at least one of the first object pose and the second object pose, and
   wherein the beam has a beam width that is less than a dimension of the target object in the first object pose and the second object pose.
12. The method of any preceding clause, wherein the first object pose and the second object pose include a lateral distance measured from the source component and an axial position that defines an angle relative to a longitudinal axis that extends through a source point at the source component, and wherein lateral distance and the angle in the first object pose is different from the lateral distance and the angle in the second object pose.
13. The method of any preceding clause, further comprising assigning values for the lateral distance and the angle for the first object pose and the second object pose to form a scan trajectory with an elliptical shape.
14. The method of any preceding clause, wherein the target object is stationary.
15. The method of any preceding clause, further comprising implementing a Feldkamp reconstruction algorithm that uses the first image and the second image for reconstructing the volumetric model.
16. A method for scanning a target object on a scan device, the scan device comprising a source component that generates a beam and a detector component that is spaced apart a distance from the source component, said method comprising:
   locating a target object according to a first set of positioning parameters;
   capturing a first image at the first set of positioning parameters;
   locating the target object according to a second set of positioning parameters;
   capturing a second image at the first set of positioning parameters,
   wherein a majority of the target object fits within the beam in at least one of the first set of positioning parameters and the second set of positioning parameters, and
   wherein the beam has a beam width that is less than a dimension of the target object in the first set of positioning parameters and the second set of positioning parameters.
17. The method of any preceding clause, further comprising returning the target object to the first set of positioning parameters.
18. The method of any preceding clause, further comprising translating the target object to the second set of positioning parameters.
19. The method of any preceding clause, further comprising rotating the target object to the second set of positioning parameters.
20. The method of any preceding clause, wherein the target object translates and rotates simultaneously.

## Claims

1. An inspection system (100) for performing a scan of a target object (104), said inspection system comprising:
a scan device (102) having a source component (106) that generates a beam (108) and a detector component (110), spaced apart a distance from the source component (106), that receives the beam (108); and
a control device (120) coupled with the scan device (102), the control device comprising a processor (122), a memory (124) coupled to the processor (122), and one more executable instructions stored in the memory (124) and configured to be executed by the processor (122), the one or more executable instructions comprising instructions for:
acquiring a first image of the target object (104) at a first object pose that defines a first lateral position and a first axial position of the target object relative to the scan device (102); and
acquiring a second image of the target object (104) at a second object pose that defines a second lateral position and a second axial position of the target object relative to the scan device (102),
wherein a majority of the target object (104) fits within the beam (108) in at least one of the first object pose and the second object pose, and
wherein the beam (108) has a beam width that is less than a dimension of the target object (104) in the first lateral position and the second lateral position.

2. The inspection system of claim 1, wherein the majority of the target object (104) fits within the beam (108) in both the first object pose and the second object pose.

3. The inspection system of claim 1 or claim 2, wherein the first object pose and the second object pose comprise part of a plurality of object poses that define a scan trajectory (336), and wherein the scan trajectory describes a path of the source component (106) from a point-of-view of the target object, wherein, preferably, the path has an elliptical shape.

4. The inspection system of claim 1, 2 or 3, further comprising a manipulator (114) for moving the target object (104) relative to the source component (106), wherein the executable instruction include instructions for operating the manipulator (114) to position the target object (104) in the first object pose and the second object pose.

5. The inspection system of any preceding claim, wherein the executable instructions comprise instructions for reconstructing a volumetric model from the first image and the second image.

6. The inspection system of claim 5, wherein the executable instructions comprise at least one of:
instructions for implementing a Feldkamp reconstruction algorithm that uses the first image and the second image for reconstructing the volumetric model, and
instructions for generating an output comprising the volumetric model representing the target object (104).

7. The inspection system of any preceding claim, wherein the first lateral position and the second lateral position define a lateral distance measured from the source component (106), and wherein the lateral distance of the first lateral position is different from the lateral distance of the second lateral position, wherein, preferably, the lateral distance in the second lateral position permits the target object to rotate in front of the source component (106).

8. A method (200) for generating a volumetric model of a target object (104) with an imaging system (102) having a source component (106) that generates a beam (108) and a detector component (110) that is spaced apart a distance from the source component (106), said method comprising steps for:
acquiring (204) a first image of the target object in a first object pose;
operating (208) a manipulator to change the first object pose to a second object pose that is different from the first object pose;
acquiring (204) a second image of the target in the second object pose;
reconstructing (210) the volumetric model from the first image and the second image; and
generating (212) an output comprising the volumetric model,
wherein a majority of the target object fits within the beam in at least one of the first object pose and the second object pose, and
wherein the beam has a beam width that is less than a dimension of the target object in the first object pose and the second object pose.

9. The method of claim 8, wherein the first object pose and the second object pose include a lateral distance measured from the source component (106) and an axial position that defines an angle relative to a longitudinal axis that extends through a source point at the source component (106), and wherein lateral distance and the angle in the first object pose is different from the lateral distance and the angle in the second object pose.

10. The method of claim 9, further comprising assigning values for the lateral distance and the angle for the first object pose and the second object pose to form a scan trajectory with an elliptical shape.

11. The method of claim 8, 9 or 10, wherein the target object (104) is stationary.

12. The method of claim 8, 9, 10 or 11, further comprising implementing a Feldkamp reconstruction algorithm that uses the first image and the second image for reconstructing the volumetric model.

13. A method (400) for scanning a target object (104) on a scan device (102), the scan device comprising a source component (106) that generates a beam (108) and a detector component (110) that is spaced apart a distance from the source component (106), said method comprising:
locating (402) a target object according to a first set of positioning parameters;
capturing (404) a first image at the first set of positioning parameters;
locating (406) the target object according to a second set of positioning parameters;
capturing (408) a second image at the first set of positioning parameters,
wherein a majority of the target object fits within the beam in at least one of the first set of positioning parameters and the second set of positioning parameters, and
wherein the beam has a beam width that is less than a dimension of the target object in the first set of positioning parameters and the second set of positioning parameters.

14. The method of claim 13, further comprising returning the target object to the first set of positioning parameters.

15. The method of claim 13 or claim 14, further comprising:
translating the target object (104) to the second set of positioning parameters, and/or
rotating the target object (104) to the second set of positioning parameters,
wherein, preferably, the target object (104) translates and rotates simultaneously.
